# EUROPÄISCHE PATENTSCHRIFT

(11) **EP 0 546 557 B1**
(45) Veröffentlichungstag und Bekanntmachung des Hinweises auf die Patenterteilung: **14.02.1996**
(21) Anmeldenummer: 92121099.3
(22) Anmeldetag: 10.12.1992
(51) Int. Cl.: F16F 15/12, F16D 3/68, F16D 13/68

(54) **Kupplungsscheibe für eine Kraftfahrzeug-Reibungskupplung**
Clutch disk for a vehicle friction clutch
Disque d'embrayage pour un embrayage à friction de véhicule

(30) Priorität: 10.12.1991 DE 4140643
(43) Veröffentlichungstag der Anmeldung: 16.06.1993
(73) Patentinhaber: FICHTEL & SACHS AG, D-97424 Schweinfurt (DE)
(72) Erfinder: Jeppe, Harald, W-8720 Schweinfurt (DE); Fischer, Matthias, W-8735 Eltingshausen (DE); Langfeldt, Martin, W-8722 Grafenrheinfeld (DE); Schultes, Peter, W-8721 Niederwerrn (DE); Feller, Winfried, W-8723 Gerolzhofen (DE)
(74) Vertreter: Liska, Horst, Dr.-Ing.

(56) Entgegenhaltungen:
- FR-A- 2 614 080
- GB-A- 2 147 085
- US-A- 4 635 780
- US-A- 5 016 744

## Beschreibung

Die Erfindung betrifft eine Kupplungsscheibe für eine Kraftfahrzeug-Reibungskupplung.

Aus der DE-A-33 40 896 (US-A-4,635,780) ist eine Kupplungsscheibe für eine Kraftfahrzeug-Reibungskupplung bekannt, deren Nabe drehfest eine Nabenscheibe trägt und bei der axial beiderseits der Nabenscheibe zwei fest miteinander verbundene und über Federn drehelastisch mit der Nabenscheibe gekuppelte Seitenscheiben drehbar angeordnet sind. Eine der Seitenscheiben trägt Kupplungsreibbeläge. Die Nabe greift in zentrische Öffnungen der beiden Seitenscheiben und ist an einer der beiden Seitenscheiben durch einen axial zwischen dieser Seitenscheibe und der Nabenscheibe angeordneten Ring radial geführt, der mit axial abstehenden Federzungen in einen Ringspalt zwischen der Nabe und der zentrischen Öffnung der einen Seitenscheibe greift.

Es ist Aufgabe der Erfindung, eine Kupplungsscheibe zu schaffen, bei welcher zur Zentrierung der Seitenscheiben an der Nabe weniger Einzelteile benötigt werden und die sich einfacher als bisher montieren läßt.

Die Erfindung geht von einer Kupplungsscheibe für eine Kraftfahrzeug-Reibungskupplung aus, die folgende Merkmale umfaßt:
- Eine zu einer Drehachse konzentrische Nabe,
- eine mit der Nabe insbesondere mit Drehspiel, ansonsten jedoch drehfest verbundene Nabenscheibe,
- axial beiderseits der Nabenscheibe angeordnete, miteinander fest verbundene und relativ zur Nabenscheibe drehbare Seitenscheiben, von denen wenigstens eine der beiden Seitenscheiben eine zentrische Öffnung hat, in die ein zur Drehachse konzentrischer, diese eine Seitenscheibe radial führender Führungsbereich der Nabe axial hineinreicht,
- mehrere die beiden Seitenscheiben drehelastisch mit der Nabenscheibe kuppelnde Federn und
- an einer der beiden Seitenscheiben gehaltene Kupplungsreibbeläge.

Die erfindungsgemäße Verbesserung besteht darin, daß der Führungsbereich der Nabe mehrere, in Umfangsrichtung der Nabe verteilt angeordnete und fest mit der Nabe verbundene, radial federnde Federzungen aufweist, die in die zentrische Öffnung der einen Seitenscheibe reichen und dort unter radialer Vorspannung an der einen Seitenscheibe anliegen.

Da die Federzungen einteilig und in Umfangsrichtung verteilt an der Nabe vorgesehen sind und unter radialer Vorspannung stehen, können die Seitenscheiben ohne zusätzliche Bauteile an der Nabe elastisch zentriert werden. Sowohl die z. B. als Deckbleche ausgebildeten Seitenscheiben als auch die Nabe könen damit mit relativ großen Toleranzen hergestellt werden. Da die Bauteile radial elastisch aneinander geführt sind, können Fluchtungsfehler zwischen der Brennkraftmaschine und dem Getriebe des Kraftfahrzeugs an dieser Stelle ausgeglichen werden. Gleichzeitig dienen die an der elastischen Zentrierung beteiligten Bauteile der Erzeugung einer Grundreibung der in die Kupplungsscheibe integrierten Drehschwingungsdämpfereinrichtung.

Nach einer Ausgestaltung der Erfindung wird der maximale Federweg zwischen der Seitenscheibe und der Nabe durch steife Anschläge, die an der Nabe vorgesehen sind, begrenzt. Die Anschläge haben verglichen mit der zentrischen Öffnung der einen Seitenscheibe einen kleineren mittleren Durchmesser. Über den durch die Federzungen bestimmten Federweg hinaus ist abhängig von dem verwendeten Material ein mehr oder weniger steifer Anschlag wirksam, der zum einen die Federzungen vor Überlastung schützt und zum anderen eine in ihrem Anfangsbereich sehr flache, das heißt bei geringer Auslenkung nur geringe und sich nur wenig ändernde Federkräfte erzeugende Federkennlinie ermöglicht.

In einer besonders einfachen Ausgestaltung ist vorgesehen, daß die Anschläge Teil der Federzungen sind. Es ist jedoch auch möglich, die Anschläge unabhängig von den Federzungen, das heißt in Umfangsrichtung im Abstand von und zwischen den Federzungen anzuordnen. Auf diese Weise können diese Komponenten unabhängig voneinander gestaltet werden.

In einer ersten Ausführungsform verlaufen die Federzungen im wesentlichen in axialer Richtung. Hierdurch läßt sich eine besonders gute Zentrierung erreichen.

In einer zweiten Ausführungsform ist vorgesehen, daß die Federzungen bogenförmig gekrümmt sind und in Umfangsrichtung verlaufen. In dieser Ausführungsform wird ein relativ großer Federweg ermöglicht.

Eine weitere Variante sieht vor, daß die Federzungen an ihren beiden Enden mit der Nabe verbunden sind und in ihrem Mittelbereich nach radial außen federnd gewölbt sind. Diese Ausführungsform hat besonders gute Festigkeitseigenschaften und die Federkennlinie läßt sich stark progressiv gestalten.

In einer vorteilhaften Ausgestaltung ist vorgesehen, daß die Federzungen mit jeweils einem Ende fest mit der Nabe verbunden sind, während das andere Ende radial frei federnd ausgeführt ist. Eine solche Anordnung ist besonders raumsparend und ermöglicht ausreichend große Federwege.

Bei einer Kupplungsscheibe, bei welcher die Nabenscheibe über eine Verzahnung mit Spiel in Umfangsrichtung, ansonsten jedoch drehfest auf der Nabe angeordnet ist und axial neben der Verzahnung eine weitere Nabenscheibe für einen Leerlauf-Schwingungsdämpfer vorgesehen ist, ist die Nabe einschließlich der Verzahnung und der Nabenscheibe des Leerlaufschwingungsdämpfers vollständig als Kunststoff-Formteil hergestellt. Ein solches relativ kompliziertes Bauteil ist damit leicht herstellbar, da keine spanabhebende Bearbeitung notwendig ist. Zugleich können auch die Federzungen integral an dem Formteil vorgesehen werden.

In einer Variante kann die Nabe als Verbund-Formteil bestehend aus einem Kunststoff-Formteil, in das ein Metall-Formteil eingesetzt ist ausgebildet werden. Der Metall-Formteil umfaßt zumindest die vorstehend erwähnte Verzahnung zum Aufsetzen der Nabenscheibe, während die weitere Nabenscheibe an dem Kunststoff-Formteil angeformt ist. Diese Anordnung bietet sich für solche Anwendugnsfälle an, bei welchen die Verzahnung besonders hoch belastet ist. Das Metall-Formteil kann für sich allein exakt hergestellt werden und wird dann beim Herstellen des Kunststoff-Formteils zweckmäßigerweise umspritzt. Bevorzugt sind die Federzungen an dem die Verzahnung bildenden Metall-Formteil einteilig angeformt.

Bevorzugt sind die Federzungen an ihrem der zentrischen Öffnung der Seitenscheibe zugekehrten Bereich mit einer Einfädelschräge versehen. Auf diese Weise läßt sich die Montage von Seitenscheibe und Nabe wesentlich erleichtern, da die Federzungen problemlos in die Öffnung der Seitenscheibe axial eingeschoben werden können.

Im folgenden werden Ausführungsbeispiele der Erfindung anhand einer Zeichnung näher erläutert. Hierbei zeigt:
- Figur 1: einen Axiallängsschnitt durch eine Kupplungsscheibe;
- Figur 2: eine Stirnansicht einer Nabe der Kupplungsscheibe in vergrößerter Darstellung;
- Figur 3: eine Schnittansicht der Nabe, gesehen entlang einer Linie III-III in Figur 2;
- Figur 4: eine Teilansicht einer Federzunge der Nabe gesehen in Richtung eines Pfeils IV in Figur 2;
- Figur 5: eine Detailansicht einer Variante einer Federzunge; und
- Figur 6: einen Teilschnitt durch eine Nabe in Verbundausführung.

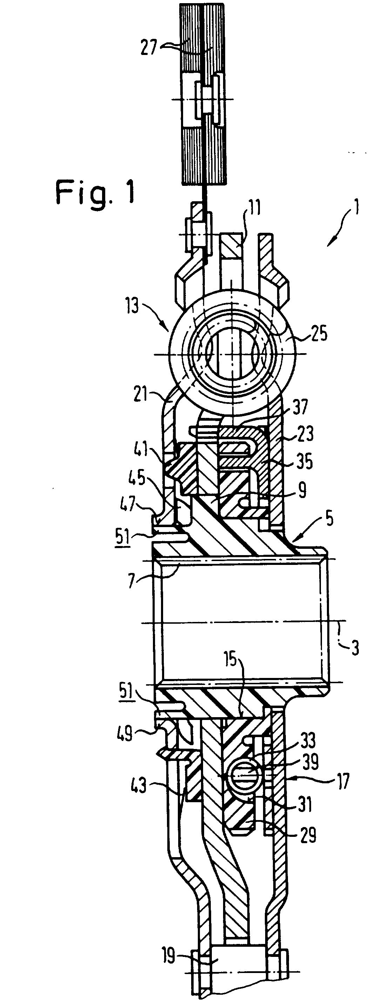

Figur 1 zeigt eine Kupplungsscheibe 1, deren Einzelteile konzentrisch zu einer Drehachse 3 angeordnet sind. Eine als Kunststoff-Formteil ausgebildete Nabe 5 hat in ihrer Innenöffnung eine Innenverzahnung 7 zum drehfesten Aufsetzen auf eine nicht näher dargestellte Getriebe-Eingangswelle. Nach radial außen hin ist die Nabe 5 mit Zähnen 9 versehen, in die eine Nabenscheibe 11 eines allgemein mit 13 bezeichneten Last-Drehschwingungsdämpfers der Kupplungsscheibe mit einer Verzahnung 15 drehfest, jedoch mit einem dem Wirkungsbereich eines nachfolgend noch näher erläuterten Leerlauf-Drehschwingunsdämpfers 17 bestimmenden Drehspiel eingreift. Axial beiderseits der Nabenscheibe 11 sind durch Nieten 19 fest miteinander verbundene und auf Abstand gehaltene Seitenscheiben 21, 23 relativ zur Nabe 5 drehbar angeordnet. Die Seitenscheiben 21, 23 sind durch Schraubenfedern 25, die in Fenstern der Seitenscheibe 21, 23 einerseits und der Nabenscheibe 11 andererseits sitzen, drehelastisch mit der Nabenscheibe 11 gekuppelt. Die Seitenscheibe 21 trägt darüber hinaus Kupplungsreibbeläge 27.

Axial neben den Zähnen 9 ist eine Nabenscheibe 29 des Leerlauf-Drehschwingungsdämpfers 17 drehfest auf die Nabe 5 aufgesetzt. Die Nabenscheibe 29 nimmt in Aussparungen 31 Schraubenfedern 33 des Leerlaufdämpfers 17 auf. Axial neben der radial innerhalb des Bereichs der Schraubenfedern 25 angeordneten Nabenscheibe 29 ist ein Steuerteil 35 angeordnet, das über Vorsprünge 37 mit der Nabenscheibe 11 und über Vorsprünge 39 mit den Schraubenfedern 33 des Leerlaufdämpfers 17 gekuppelt ist.

Auf der dem Steuerteil 35 abgewandten Seite der Nabenscheibe 11 ist ein an der Nabenscheibe 11 anliegender Reibring 41 einer Last-Reibeinrichtung vorgesehen, der mit der Seitenscheibe 21 drehfest verbunden ist und von einer Tellerfeder 43 gegen die Nabenscheibe 11 gespannt wird. Der Kraftweg der Tellerfeder 43 schließt sich über die andere Seitenscheibe 23 und das über die Vorsprünge 37 an der Nabenscheibe 11 abgestützte Steuerteil 35.

Radial innerhalb des Reibrings 41 ist eine Wellfeder 45 angeordnet, die sich einerseits an der Innenseite der Seitenscheibe 21 und anderereseits an den Zähnen 9 der Nabe 5 abstützt. Die Wellfeder 45 erzeugt eine sowohl im Leerlaufbereich als auch im Lastbereich wirksame Grundreibung.

Eine der beiden Seitenscheiben 21, 23, hier die Seitenscheibe 21 hat eine zur Drehachse konzentrische Öffnung 47, die im vorliegenden Fall durch einen axial ausgestellten Bund 49 begrenzt wird. Der Bund 49 dient der Vesteifung der Seitenscheibe 21 und zur Vergrößerung der Anlageflächen von Federzungen 51, die von der Nabe 5 axial abstehen und in die zentrische Öffnung 47 der Seitenscheibe 21 eingreifen. Die eigenelastischen Federzungen 51 liegen nach radial außen vorgespannt an der zentrischen Öffnung 47 an und zentrieren die Seitenscheibe 21 relativ zur Nabe 5. Über die Seitenscheibe 21 werden damit auch sämtliche anderen relativ zur Nabe 5 verdrehbaren Komponenten der Kupplungsscheibe 1 relativ zur Drehachse 3 zentriert. Die Nabe 5 ist einschließlich der Federzungen 51 und der Zähne 9 als Kunsstofformteil ausgebildet. Eine solche einteilige Ausführungsform ist besonders wirtschaftlich herstellbar. Es versteht sich, daß der Bund 49 gegebenenfalls entfallen kann.

Im folgenden werden Varianten von Naben erläutert, die in der Kupplungsscheibe nach Figur 1 eingesetzt werden können. Gleichwirkende Teile sind mit den Bezugszahlen aus Figur 1 bezeichnet und zur Unterscheidung mit einem Buchstaben versehen. Zur Erläuterung wird insoweit auf die Beschreibung der Figur 1 Bezug genommen.

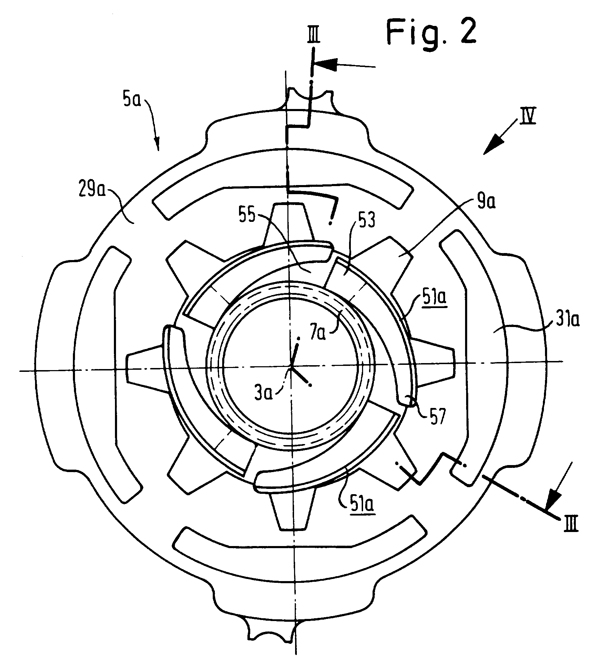

In den Figuren 2 bis 4 ist eine Nabe 5a dargestellt, deren Federzungen 51a in Umfangsrichtung verlaufend angeordnet sind und mit ihrem einen Ende 53 fest mit einem im wesentlichen hülsenförmigen Nabenkörper 55 der Nabe 5a verbunden sind, während das freie andere Ende 57 zur Zentrierung der Seitenscheibe 21 ausgenutzt wird. Die federnden Endbereiche 57 der Federzungen 51a definieren im nicht eingebauten, in Figur 2 dargestellten Zustand einen zur Drehachse 3a konzentrischen Umkreis, der größer ist als der von den fußseitigen, fest mit dem Nabenkörper 55 verbundenen Enden 53 definierte Umkreis. Der Umkreisdurchmesser der Enden 53 ist kleiner als der Innendurchmesser der zentrischen Öffnung 47 der Seitenscheibe 21. Die ebenfalls in die zentrische Öffnung 47 (Figur 1) der Seitenscheibe 21 eingreifenden Enden 53 bilden damit Anschläge, die den radialen Federweg der Federzungen 51a begrenzen und die Federzungen 51a vor Überlastung schützen. Die Anschläge bzw. Enden 53 begrenzen die maximale radiale Auslenkung der Seitenscheiben 21, 23 relativ zur Nabe 5a. Wie die Figuren 2 bis 4 zeigen, sind die Federzungen 51a an ihren sowohl axial als auch radial äußeren Rändern mit Einfädelschrägen 59 versehen, die die Montage der Seitenscheibe 21 und der Nabe 5a wesentlich erleichtern, da sie das Einzwängen der im nicht verbauten Zustand auf einem größeren Durchmesser sich befindenden Federzungen 51a in die zentrische Öffnung 47 der Seitenscheibe 21 erleichtern.

Im Gegensatz zur Nabe der Figur 1 sind bei der Nabe 5a nicht nur die Federzungen 51a und die für die Kupplung mit der Nabenscheibe 11 bestimmten Zähne 9a integraler Bestandteil des Kunststof-Formkörpers, sondern auch die Nabenscheibe 29a des Leerlauf-Schwingungsdämpfers.

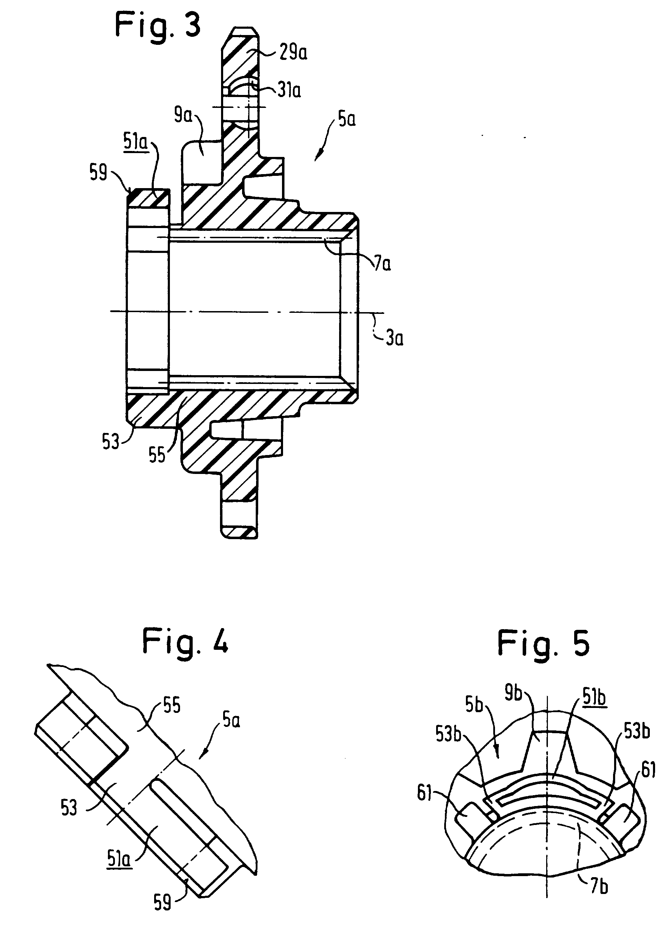

Figur 5 zeigt ausschnittsweise eine Variante der Nabe aus Figur 2, bei der in Umfangsrichtung langgestreckt verlaufende Federzungen 51b an beiden Enden 53b integral an der Nabe 5b gehalten sind. Die Federzungen 51b sind in ihrem zwischen den Enden 53b gelegenen mittlerem Bereich nach radial außen gewölbt und hier radial federnd ausgebildet. In Umfangsrichtung im Abstand und zwischen den Enden 53b benachbarter Federzungen 51b sind Anschläge 61 an der als Kunsstoff-Formkörper ausgebildeten Nabe 5b angeformt. Die Anschläge 61 definieren wiederum einen kleineren Umkreisdurchmesser als der Innendurchmesser der zentrischen Öffnung 47 der Seitenscheibe 21, so daß sie den Federweg in der vorstehend erläuternden Weise begrenzen. Da die Anschläge 61 gesondert von den Federzungen 51b vorgesehen sind, läßt sich eine Funktionstrennung erreichen, die es erlaubt die Anschläge 61 unabhängig von den Federzungen 51b zu optimieren. Es versteht sich, daß die Anschläge 61, nachdem sie aus Kunsstoff hergestellt sind, nicht absolut feste Anschläge bilden müssen, sondern im Rahmen der Elastizität des verwendeten Materials als im begrenzten Maß ebenfalls federnde Puffer bilden können.

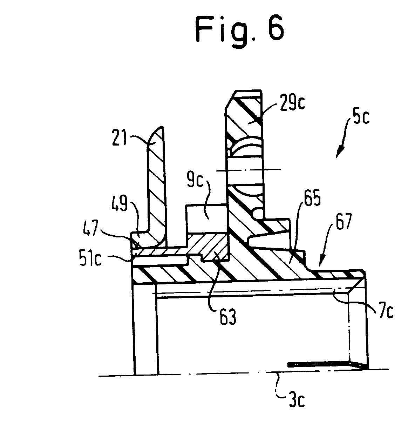

Figur 6 zeigt eine Variante einer als Verbund-Formteil ausgebildeten Nabe 5c, die ein aus Metall gefertigtes Verzahnungs-Formteil 63 aufweist, an welchem ein den Nabenflansch 29c und ein die Innenverzahnung 7c tragendes Hülsenteil 65 umfassendes Kunststoff-Formteil 67 angespritzt ist. Das Verzahnungsteil 63 weist die mit der Nabenscheibe 11 zu kuppelnden ZähneLund hier axial abstehende Federzungen 51c integral angeformt auf. Die Herstellung der Nabe 5c als Verbundteil hat den Vorteil, daß bei hoher Belastung im Verzahnungsbereich 9c keine Festigkeitsprobleme entstehen. Zudem kann in einem solchen Fall die Verzahnung sehr kompakt ausgeführt werden. Gleichzeitig werden die federnden Eigenschaften des Metalls für die Federzungen 51c ausgenutzt. Die Seitenscheibe 21 kann mit der zentrischen Öffnung 47 ihres Bunds 49 direkt auf dem Außenumfang der Federzungen 51c gelagert werden.

## Patentansprüche

1. Kupplungsscheibe für eine Kraftfahrzeug-Reibungskupplung, umfassend:
- eine zu einer Drehachse (3) konzentrische Nabe (5),
- eine mit der Nabe (5) insbesondere mit Drehspiel, ansonsten jedoch drehfest verbundene Nabenscheibe (11),
- axial beiderseits der Nabenscheibe (11) angeordnete, miteinander fest verbundene und relativ zur Nabenscheibe (11) drehbare Seitenscheiben (21, 23), von denen wenigstens eine (21) der beiden Seitenscheiben (21, 23) eine zentrische Öffnung (47) hat, in die ein zur Drehachse (3) konzentrischer, diese eine Seitenscheibe (21) radial führender Führungsbereich der Nabe (5) axial hineinreicht,
- mehrere die beiden Seitenscheiben (21, 23) drehelastisch mit der Nabenscheibe (11) kuppelnde Federn (25) und
- an einer (21) der beiden Seitenscheiben (21, 23) gehaltene Kupplungsreibbeläge (27),
dadurch gekennzeichnet, daß der Führungsbereich der Nabe (5) mehrere, in Umfangsrichtung der Nabe (5) verteilt angeordnete und fest mit der Nabe (5) verbunden, radial federnde Federzungen (51) aufweist, die in die zentrische Öffnung (47) der einen Seitenscheibe (21) reichen und dort unter radialer Vorspannung an der einen Seitenscheibe (21) anliegen.

2. Kupplungsscheibe nach Anspruch 1,
dadurch gekennzeichnet, daß die Nabe (5a, b) im Bereich der Federzungen (51a, b) in die zentrische Öffnung (47) der einen Seitenscheibe (21) reichende radial im wesentlichen steife Anschläge (53; 61) trägt, deren radial äußere Kontur einen Durchmesser hat, der kleiner ist als der Innendurchmesser der zentrischen Öffnung (47) und die den radialen Federweg der einen Seitenscheibe (21) relativ zur Drehachse (3a, b) der Nabe (5a, b) begrenzen.

3. Kupplungsscheibe nach Anspruch 2,
dadurch gekennzeichnet, daß die Anschläge (53) Teil der Federzungen (51a) sind.

4. Kupplungsscheibe nach Anspruch 3,
dadurch gekennzeichnet, daß die Federzungen (51a) an zumindest einem Ende einen einteilig mit der Nabe fest verbundene, die Anschläge (53) bildende Fußbereiche haben.

5. Kupplungsscheibe nach Anspruch 2,
dadurch gekennzeichnet, daß die Anschläge (61) zwischen und im Abstand von in Umfangsrichtung benachbarten Federzungen (51b) an der Nabe (5b) angeordnet sind.

6. Kupplungsscheibe nach einem der Ansprüche 1 bis 5,
dadurch gekennzeichnet, daß die Federzungen (51a, b) in Umfangsrichtung der Nabe (5a, b) langgestreckt und bogenförmig um die Drehachse (3a, b) herum gekrümmt sind.

7. Kupplungsscheibe nach Anspruch 6,
dadurch gekennzeichnet, daß beide Enden der Federzungen (51b) fest mit der Nabe (5b) verbunden sind und die Federzungen (51b) in ihrem zwischen den Enden (53b) gelegenen, Mittelbereich radial federnd nach radial außen gewölbt sind.

8. Kupplungsscheibe nach Anspruch 6,
dadurch gekennzeichnet, daß die Federzungen (51a) mit je einem Ende (53a) fest mit der Nabe (5a) verbunden sind und zum anderen Ende (57) radial federnd frei abstehen.

9. Kupplungsscheibe nach einem der Ansprüche 1 bis 5,
dadurch gekennzeichnet, daß die Federzungen (51) im wesentlichen in Richtung der Drehachse (3) langgestreckt von der Nabe (5) abstehen.

10. Kupplungsscheibe nach einem der Ansprüche 1 bis 9,
dadurch gekennzeichnet, daß die Nabe (5a, b) einschließlich der Federzungen (51a, b), einer die Nabenscheibe (11) mit Drehspiel ansonsten jedoch drehfest mit der Nabe (5a, b) kuppelnden, am Umfang der Nabe (5a, b) angeordneten Verzahnung (9a, b) und einer axial neben der Verzahnung (9a, b) fest angeordneten weiteren Nabenscheibe (29a, b) für einen Leerlauf-Drehschwingungsdämpfer integral als Kunststoff-Formkörper ausgebildet ist.

11. Kupplungsscheibe nach einem der Ansprüche 1 bis 9,
dadurch gekennzeichnet, daß die Nabe (5c) als Verbund-Formteil bestehend aus einem Kunststoff-Formkörper (67) und einem Metall-Formkörper (63) ausgebildet ist, wobei der Metall-Formkörper (63) zumindest eine die Nabenscheibe (11) . mit Drehspiel ansonsten jedoch drehfest mit der Nabe (5c) kuppelnde Verzahnung (9c) und der Kunststoff-Formkörper (67) zumindest einen mit einer Innenverzahnung (7c) versehenen Hülsenteil (65) und eine axial neben der Verzahnung (9c) des Metall-Formteils (63) fest angeordnete, weitere Nabenscheibe (29c) für einen Leerlauf-Drehschwingungsdämpfer aufweist.

12. Kupplungsscheibe nach Anspruch 11,
dadurch gekennzeichnet, daß die Federzungen (11c) an dem Metall-Formkörper angeformt sind und auf der von der weiteren Nabenscheibe (29c) axial abgewandten Seite der Verzahnung (9c) vorgesehen sind.

13. Kupplungsscheibe nach einem der Ansprüche 1 bis 12,
dadurch gekennzeichnet, daß die Federzungen (51a) an ihren sowohl axial als auch radial außen gelegenen Rändern mit Einfädelschrägen (59) versehen sind.

## Claims

1. Clutch plate for a motor vehicle friction clutch comprising:
- a hub (5) which is concentric with an axis of rotation (3),
- a hub disc (11) which is connected, in particular with rotational play but otherwise non-rotatably, to the hub (5),
- lateral discs (21, 23) which are arranged axially on either side of the hub disc (11), are rigidly connected to one another, are rotatable relative to the hub disc (11) and of which at least one (21) of the two lateral discs (21, 22) has a central opening (47) into which there axially extends a guide region of the hub (5) which is concentric with the axis of rotation (3) and radially guides this lateral disc (21),
- a plurality of springs (25) torsionally elastically coupling two lateral discs (21, 23) to the hub disc (11) and
- clutch friction linings (27) held on one (21) of the two lateral discs (21, 23),
characterised in that the guide region of the hub (5) has a plurality of radially resilient spring tongues (51) which are distributed in the peripheral direction of the hub (5), are rigidly connected to the hub (5), extend into the central opening (47) of one lateral disc (21) and rest there under radial initial tension on one lateral disc (21).

2. Clutch plate according to claim 1, characterised in that the hub (5a, b) carries, in the region of the spring tongues (51a, b), stops (53; 61) which extend into the central opening (47) of one lateral disc (21), are radially substantially rigid and of which the radially outer contour has a diameter which is smaller than the internal diameter of the central opening (47) and which limits the resilient radial travel of one lateral disc (21) relative to the axis of rotation (3a, b) of the hub (5a, b).

3. Clutch plate according to claim 2, characterised in that the stops (53) are part of the spring tongues (51a).

4. Clutch plate according to claim 3, characterised in that the spring tongues (51a) have, at least at one end, a foot region which is rigidly integrally connected to the hub and forms the stops (53).

5. Clutch plate according to claim 2, characterised in that the stops (61) are arranged on the hub (5b) between and at a distance from peripherally adjacent spring tongues (51b).

6. Clutch plate according to one of claims 1 to 5, characterised in that the spring tongues (51a, b) are elongated in the peripheral direction of the hub (5a, b) and are bent in the form of an arc around the axis of rotation (3a, b).

7. Clutch plate according to claim 6, characterised in that the two ends of the spring tongues (51b) are rigidly connected to the hub (5b) and the spring tongues (51b) are radially resiliently radially outwardly curved in their central region located between the ends (53b).

8. Clutch plate according to claim 6, characterised in that the spring tongues (51a) are rigidly connected to the hub (5a) with one respective end (53a) and radially resiliently project freely at the other end (57).

9. Clutch plate according to one of claims 1 to 5, characterised in that the spring tongues (51) are elongated substantially in the direction of the axis of rotation (3) and project from the hub (5).

10. Clutch plate according to one of claims 1 to 9, characterised in that the hub (5a, b) including the spring tongues (51a, b), a set of teeth (9a, b) which couples the hub disc (11) with rotational play but otherwise non-rotatably to the hub (5a, b) and is arranged on the periphery of the hub (5a, b) and a further hub disc (29a, b) rigidly arranged axially next to the set of teeth (9a,b) for an idling torsional vibration damper is constructed integrally as a plastics shaped part.

11. Clutch plate according to one of claims 1 to 9, characterised in that the hub (5c) is designed as a composite moulding consisting of a plastics shaped part (67) and a metallic shaped part (63), the metallic shaped part (63) having at least one set of teeth (9c) coupling the hub disc (11) with rotational play but otherwise non-rotatably to the hub (5c) and the plastics shaped part (67) having at least one sleeve part (65) provided with an internal set of teeth (7c) and a further hub disc (29c) for an idling torsional vibration damper rigidly arranged axially next to the set of teeth (9c) of the metallic shaped part (63).

12. Clutch plate according to claim 11, characterised in that the spring tongues (11c) are shaped on the metal shaped part and are provided on the side of the set of teeth (9c) axially remote from the further hub disc (29c).

13. Clutch plate according to one of claims 1 to 12, characterised in that the spring tongues (51a) are provided with inserting bevels (59) at their axially as well as radially externally located edges.

## Revendications

1. Disque d'embrayage destiné à un embrayage à friction d'un véhicule à moteur comprenant :
- un moyeu (5) concentrique à un axe de rotation (3),
- un plateau de moyeu (11) assemblé en particulier avec un certain jeu de rotation, mais sinon solidaire en rotation avec le moyeu (5),
- des disques latéraux (21, 23), disposés axialement de part et d'autre du plateau de moyeu (11), assemblés fixement l'un à l'autre et capables de tourner par rapport au plateau de moyeu (11), au moins l'un (21) des disques latéraux (21, 23) présentant une ouverture centrée (47) dans laquelle pénètre axialement une section de guidage du moyeu (5) guidant radialement ledit disque latéral (21) et concentrique à l'axe de rotation (3),
- plusieurs ressorts (25) couplant élastiquement en rotation les deux disques latéraux (21, 23) avec le plateau de moyeu (11) et,
- des garnitures de friction d'embrayage fixées sur l'un (21) des deux disques latéraux (21, 23).
caractérisé en ce que la section de guidage du moyeu (5) présente plusieurs lames formant ressorts (51) élastiques dans le sens radial, qui sont réparties sur la circonférence du moyeu (5) et sont assemblées fixement avec le moyeu (5), s'avançant jusque dans l'ouverture centrée (47) de l'un (21) des disques latéraux et qui, à cet endroit, prennent appui sur ledit disque latéral (21), en étant soumis à une précontrainte radiale.

2. Disque d'embrayage selon la revendication 1,
caractérisé en ce que, le moyeu (5a, b) comporte dans le secteur des lames formant ressorts (51a, b) des butées (53 ; 61) sensiblement rigides dans le sens radial et s'avançant dans l'ouverture centrée (47) du disque latéral (21), dont le pourtour extérieur dans le sens radial présente un diamètre inférieur au diamètre intérieur de l'ouverture centrée (47) et qui limitent la course élastique radiale du disque latéral (21) par rapport à l'axe de rotation (3a, b) du moyeu (5a, b).

3. Disque d'embrayage selon la revendication 2,
caractérisé en ce que, les butées (53) constituent une partie des lames formant ressorts (51a).

4. Disque d'embrayage selon la revendication 3,
caractérisé en ce que, les lames formant ressorts (51a) comportent au moins à une extrémité un secteur formant pied assemblé fixement d'un seul tenant avec le moyeu et formant les butées (53).

5. Disque d'embrayage selon la revendication 2,
caractérisé en ce que, les butées (61) sont montées sur le moyeu (5b), entre et à distance de lames formant ressorts (51b) voisines, dans le sens circonférentiel.

6. Disque d'embrayage selon l'une des revendications 1 à 5,
caractérisé en ce que, les lames formant ressorts (51a, b) s'étendent dans le sens circonférentiel du moyeu (5a, b) en étant cintrées autour de l'axe de rotation (3a, b).

7. Disque d'embrayage selon la revendication 6,
caractérisé en ce que, les deux extrémités des lames formant ressorts (51b) sont assemblées de manière fixe avec le moyeu (5a) et en ce que dans leur zone centrale située entre les extrémités (53b) les lames formant ressorts (51b) sont cintrées radialement vers l'extérieur, en étant élastiques dans le sens radial.

8. Disque d'embrayage selon la revendication 6,
caractérisé en ce que les lames formant ressorts (51a) sont assemblées de manière fixe avec le moyeu (5a) chacune par une extrémité (53a) et font saillie librement en étant élastiques radialement, à l'autre extrémité (57).

9. Disque d'embrayage selon l'une des revendications 1 à 5,
caractérisé en ce que, les lames formant ressorts (51) font saillie à partir du moyeu (5) en s'étendent essentiellement dans le sens de l'axe de rotation (3).

10. Disque d'embrayage selon l'une des revendications 1 à 9,
caractérisé en ce que, le moyeu (5a, b) , y compris les lames formant ressorts (51a, b), une denture (9a, b), montée sur le pourtour du moyeu (5a, b) et couplant le disque de moyeu (11) avec un jeu de rotation ou sinon sans rotation possible par rapport au moyeu (5a, b), et un autre disque de moyeu (29a, b), destiné à un amortisseur de vibrations de rotation à vide et monté de manière fixe à côté de la denture (9a; b) dans le sens axial, constitue une pièce moulée d'un seul tenant en matière synthétique.

11. Disque d'embrayage selon l'une des revendications 1 à 9,
caractérisé en ce que, le moyeu (5c) est conçu comme une pièce moulée composite, constituée d'un corps moulé (67) en matière synthétique et d'un corps moulé (63) en métal, le corps moulé (63) en métal comportant au moins une denture (9c) couplant le plateau de moyeu (11) avec un jeu de rotation ou sinon sans rotation possible avec le moyeu (5c), et le corps moulé (67) en matière synthétique comportant au moins une pièce formant douille (65) pourvue d'une denture intérieure (7c) ainsi qu'un autre plateau de moyeu (29c) monté de manière fixe à côté de la denture (9c) de la pièce formée en métal (63) dans le sens axial et destiné à un amortisseur de vibrations de rotation à vide.

12. Disque d'embrayage selon la revendication 11,
caractérisé en ce que, les lames formant ressorts (11c) sont formées sur un corps moulé en métal et sont prévues sur le côté de la denture (9c) qui est opposé axialement à l'autre plateau de moyeu (29c).

13. Disque d'embrayage selon l'une des revendications 1 à 12,
caractérisé en ce que, les lames formant ressorts (51a) sont pourvues de chanfreins d'insertion (59) sur leurs bords extérieurs aussi bien axiaux que radiaux.
